# EUROPÄISCHE PATENTSCHRIFT

(11) **EP 2 586 286 B1**
(45) Veröffentlichungstag und Bekanntmachung des Hinweises auf die Patenterteilung: **04.03.2015**
(21) Anmeldenummer: 12186814.5
(22) Anmeldetag: 01.10.2012
(51) Int. Cl.: A01D 41/127

(54) **Anordnung und Verfahren zur vorausschauenden Untersuchung von mit einer Erntemaschine aufzunehmenden Pflanzen**
Assembly and method for the preliminary investigation of plants to be picked up with a harvester
Agencement et procédé destinés à l'examen prévisionnel de plantes récoltées avec une moissonneuse

(30) Priorität: 28.10.2011 DE 102011085380
(43) Veröffentlichungstag der Anmeldung: 01.05.2013
(73) Patentinhaber: DEERE & COMPANY, Moline, Illinois 61265-8098 (US)
(72) Erfinder: Dima, Cristian, 66386 St. Ingbert/Rohrbach (DE); Jung, Benedikt, 67661 Kaiserslautern (DE); Hahn, Klaus, 68199 Mannheim (DE); Peters, Dr., Ole, 25724 Neufeld (DE)
(74) Vertreter: Holst, Sönke

(56) Entgegenhaltungen:
- EP-A1- 2 143 316
- DE-A1- 10 346 541
- DE-A1-102008 043 716

## Beschreibung

Die Erfindung betrifft eine Anordnung zur vorausschauenden Untersuchung von mit einer Erntemaschine aufzunehmenden Pflanzen, umfassend:
eine berührungslos mit Pflanzen auf einem Feld zusammenwirkende Sensoranordnung zur Erzeugung von Signalen hinsichtlich mindestens einer Eigenschaft der Pflanzen,
eine Messeinrichtung zur Erfassung einer Eigenschaft von tatsächlich von der Erntemaschine aufgenommenen Pflanzen,
und eine Auswertungseinrichtung zur Erzeugung von Kalibrierdaten anhand von Signalen der Messeinrichtung und aus den Signalen der Sensoranordnung abgeleiteten statistischen Parametern, sowie zur Berechnung der Eigenschaft von aufzunehmenden Pflanzen anhand statistischer Parameter, welche aus den den aufzunehmenden Pflanzen zugehörigen Signalen der Sensoranordnung abgeleitet sind, und der Kalibrierdaten sowie ein entsprechendes Verfahren.

### Stand der Technik

Bei Erntemaschinen ist zu Zwecken einer selbsttätigen Einstellung von Gutförder- und/oder Gutbearbeitungseinrichtungen eine Messung des Gutdurchsatzes sinnvoll. Der Gutdurchsatz wird häufig auch zu Zwecken der teilflächenspezifischen Bewirtschaftung gemessen. Weiterhin kann anhand des gemessenen Gutdurchsatzes die Vortriebsgeschwindigkeit der Erntemaschine auf einem Feld durch eine entsprechende Steuerung derart eingestellt werden, dass ein gewünschter Gutdurchsatz erreicht wird, der beispielsweise einer optimalen Auslastung der Erntemaschine entspricht. Es ist üblich, den Gutdurchsatz durch entsprechende Sensoren in der Erntemaschine zu ermitteln. Da die Messung erst erfolgt, nachdem das Gut von der Erntemaschine aufgenommen wurde, kann eine sprunghafte Änderung des Gutdurchsatzes bei derartigen Sensoren nicht mehr durch eine entsprechende Anpassung der Fahrgeschwindigkeit ausgeglichen werden, was eine Unter- oder Überlastung von Gutbearbeitungseinrichtungen oder sogar Verstopfungen zur Folge haben kann.

Die DE 10 2008 043 716 A1 beschreibt eine Vorrichtung zur Erfassung der Pflanzenmenge auf einem Feld mit einem Sender, der elektromagnetische Wellen im sichtbaren oder nahinfraroten Bereich von der Maschine schräg nach vorn und unten auf einen vor der Maschine vorhandenen Pflanzenbestand abstrahlt und einem orts- und/oder winkelauflösend arbeitenden Empfänger, der von den Pflanzen des Pflanzenbestandes und/oder vom Erdboden reflektierte Wellen empfängt. Eine Auswertungseinrichtung ermittelt die Laufzeit der Wellen des Senders zum Empfänger an unterschiedlichen Punkten entlang einer quer zur Vorwärtsrichtung verlaufenden Messrichtung und bestimmt die Pflanzenmenge anhand der Variation der erfassten Laufzeiten. Eine Erfassung der Bestandsdichte der Pflanzen beruht darauf, dass bei dichten Beständen fast alle Wellen vom Blätterdach oder den Fruchtständen der Pflanzen reflektiert werden, was eine recht geringe Variation der der erfassten Laufzeiten bedeutet, während bei dünnen Beständen ein größerer Anteil der Wellen vom Erdboden reflektiert wird, was an den betreffenden Stellen wesentlich längere Laufzeiten des Lichts und größere Variationen der Laufzeiten entlang der Messrichtung zur Folge hat. Die Bestandsdichte wird anhand der statistischen Parameter (d.h. der Variationen in den Laufzeiten der Wellen) unter Anwendung einer durch Versuche ermittelten, fest abgespeicherten Kalibriertabelle bestimmt und mit der vertikalen Fläche der Pflanzen multipliziert, um die bei der Ernte zu erwartende Pflanzenmenge zu bestimmen. Unter Berücksichtigung der Schnitthöhe und der Pflanzenart erfolgt eine Kalibrierung der detektierten Pflanzenmenge anhand von Messwerten eines Gutdurchsatzsensors der Erntemaschine, wobei zur Erstellung der Kalibrierdaten auf ein Expertensystem oder ein neuronales Netzwerk zurückgegriffen wird und die Kalibrierdaten von Zeit zu Zeit neu ermittelt werden können, um geänderten Umgebungsbedingungen Rechnung zu tragen. Der Zusammenhang zwischen dem statistischen Parameter und der Bestandsdichte ist hier demnach durch Versuche bestimmt und fest vorgegeben, sodass er nicht unter allen Betriebsbedingungen zu optimalen Ergebnissen führt.

### Aufgabe

Die der Erfindung zu Grunde liegende Aufgabe wird darin gesehen, eine verbesserte Vorrichtung und ein Verfahren zur Erfassung der Menge von Pflanzen auf einem Feld bereitzustellen.

### Lösung

Diese Aufgabe wird erfindungsgemäß durch die Lehre der Patentansprüche 1 und 12 gelöst, wobei in den weiteren Patentansprüchen Merkmale aufgeführt sind, die die Lösung in vorteilhafter Weise weiterentwickeln.

Eine Anordnung zur vorausschauenden Untersuchung von mit einer Erntemaschine aufzunehmenden Pflanzen umfasst eine berührungslos mit Pflanzen auf einem Feld zusammenwirkende Sensoranordnung zur Erzeugung von Signalen hinsichtlich mindestens einer Eigenschaft der Pflanzen, eine Messeinrichtung zur Erfassung einer Eigenschaft von tatsächlich von der Erntemaschine aufgenommenen Pflanzen, und eine Auswertungseinrichtung zur Erzeugung von Kalibrierdaten anhand von Signalen der Messeinrichtung und aus den Signalen der Sensoranordnung abgeleiteten statistischen Parametern, sowie zur Berechnung der Eigenschaft von aufzunehmenden Pflanzen anhand statistischer Parameter, die aus den den aufzunehmenden Pflanzen zugehörigen Signalen der Sensoranordnung abgeleitet wurden, und anhand der Kalibrierdaten. Die Auswertungseinrichtung bestimmt selbsttätig Zusammenhänge zwischen den aus den Signalen der Sensoranordnung abgeleiteten statistischen Parametern und den Signalen der Messeinrichtung und berücksichtigt diese ermittelten Zusammenhänge später bei der Berechnung der Eigenschaft der aufzunehmenden Pflanzen.

Demnach ist die Arbeitsweise der erfindungsgemäßen Anordnung derart, dass zunächst ein Lernvorgang erfolgt. Bei diesem Lernvorgang werden der Auswertungseinrichtung Signale von einer Sensoreinrichtung zugeführt, die berührungslos eine oder mehrere Eigenschafte(n) von (stehenden oder liegenden, d.h. abgeschnittenen) Pflanzen auf einem Feld erfasst. Die Auswertungseinrichtung bestimmt anhand dieser Signale einen oder mehrere statistische Parameter der Pflanzen. Außerdem erfasst eine Messeinrichtung ebenfalls die eine oder mehrere Eigenschafte(n) der nunmehr von einer Erntemaschine aufgenommenen Pflanzen, und zwar insbesondere genau jener Pflanzen, die zuvor durch die Sensoreinrichtung untersucht wurden. Dabei kann dieselbe Eigenschaft erfasst werden, die schon die Sensoreinrichtung erfasst hat, oder eine andere Eigenschaft. Der Auswertungseinrichtung liegen somit zwei unterschiedliche Messwerte hinsichtlich der Eigenschaft(en) der Pflanzen vor, nämlich die berührungslos aufgenommenen Messwerte von der Sensoreinrichtung, die aufgrund der Arbeitsweise der berührungslos arbeitenden Sensoreinrichtung mit einer gewissen Unsicherheit belegt sind, und die an Bord der Erntemaschine aufgenommenen Messwerte der Messeinrichtung, die hinreichend genau sind. Die Auswertungseinrichtung bestimmt aus diesen Messwerten Kalibrierdaten, mit denen nach Ende des Lernvorgangs in einem Anwendungsvorgang die Messwerte der Sensoreinrichtung (bzw. daraus abgeleitete statistische Parameter) möglichst genau in Eigenschaften der Pflanzen umgerechnet werden können. Mittels der im Lernvorgang erzeugten Kalibrierdaten werden die Eigenschaft(en) der Pflanzen im Anwendungsvorgang vorausschauend und mit hinreichender Genauigkeit bestimmt, was eine Anpassung von Parametern der Erntemaschine an die Eigenschaft(en) der Pflanzen erleichtert.

Erfindungsgemäß wird nun vorgeschlagen, beim Lernvorgang aus den Signalen der Sensoreinrichtung statistische Parameter der Pflanzen abzuleiten und Zusammenhänge zwischen diesen statistischen Parametern und den Signalen der Messeinrichtung zu erlernen. Es wird somit anders als im Stand der Technik (DE 10 2008 043 716 A1) nicht lediglich der Zusammenhang zwischen einer ermittelten Eigenschaft der Pflanzen (z.B. Pflanzenmenge pro Fläche), die anhand der Signale der Sensoreinrichtung und daraus abgeleiteter statistischer Parameter bestimmt wurde, und den zugehörigen Signalen der Messeinrichtung bestimmt, um die Kalibrierdaten zu erstellen, sondern die aus den Signalen der Messeinrichtung abgeleiteten statistischen Parameter selbst werden mit den Signalen der Messeinrichtung verknüpft, um die Zusammenhänge zwischen den statistischen Parametern und den Signalen der Messeinrichtung zu erlernen und in die Kalibrierdaten aufzunehmen. Beim Anwendungsvorgang, der zeitlich mit dem Lernvorgang zusammenfallen kann, werden dann die statistischen Parameter (ggf. gemeinsam mit anderen Parametern der Signale der Messeinrichtung) anhand der Kalibrierdaten in die gesuchte(n) Eigenschaft(en) der Pflanzen umgerechnet. Auf diese Weise wird die Genauigkeit der ermittelten Eigenschaft(en) der Pflanzen verbessert.

Die zu bestimmende Eigenschaft der Pflanzen kann die Bestandsdichte der gesamten Pflanzen (gemessen in Volumen oder Masse je Fläche) und/oder die Bestandsdichte der Pflanzen an Korn und/oder Stroh (ebenfalls gemessen in Volumen oder Masse je Fläche) und/oder die Feuchtigkeit der Pflanzen sein.

Die Messeinrichtung kann direkt mit den von der Erntemaschine aufgenommenen oder verarbeiteten Pflanzen zusammenwirken, d.h. als Erntegutsensor ausgeführt sein und beispielsweise die Schichtdicke oder Masse der von der Erntemaschine aufgenommenen Pflanzen direkt erfassen. Alternativ oder zusätzlich kann die Messeinrichtung einen Betriebswert einer Erntegutförder- und/oder -bearbeitungseinrichtung erfassen, beispielsweise die Antriebsleistung eines Schrägförderers und/oder einer Drescheinrichtung und/oder Verluste einer Trenneinrichtung und/oder Verluste einer Reinigungseinrichtung und/oder ein Überkehrvolumen und/oder die Reinheit gereinigten Korns. Falls die zu ermittelnde Eigenschaft der Pflanzen die Feuchtigkeit ist, kann die Messeinrichtung ein geeigneter Feuchtigkeitssensor sein.

Die Sensoranordnung kann an der Erntemaschine angebracht sein und von einer geeigneten Stelle (z.B. einer Kabine, einem Einzugsförderer oder einem Erntevorsatz) aus auf den Pflanzenbestand vor der Erntemaschine blicken. Es wäre auch denkbar, sie an einem separaten Land- oder Luftfahrzeug oder einem Satelliten anzubringen. Bei dem separaten Landfahrzeug kann es sich um einen unbemannten Roboter handeln, der ein abzuerntendes Feld um- oder abfährt, oder um ein Dünge- oder Spritzenfahrzeug, welches das Feld vor der Ernte befährt und die Sensordaten bei dem Dünge- oder Spritzarbeitsgang gleich mit sammelt. Die Sensoranordnung kann auch an einem bemannten oder unbemannten Flugzeug oder Hubschrauber oder einem Satelliten angebracht werden.

Bei der Sensoranordnung kann es sich um eine Kamera handeln. Die statistischen Parameter sind dann beispielsweise aus dem Bild (bzw. Teilbildern) der Kamera abgeleitete Texturparameter und/oder Farbhistogramme. Die Kamera kann auch als Stereokamera oder 3d-Kamera (d.h. als Photonenmischkamera) ausgeführt sein.

Die Sensoranordnung kann alternativ oder zusätzlich einen mit elektromagnetischen Wellen die Pflanzen abtastenden Entfernungsmesser umfassen, d.h. einen Radar- oder Laserentfernungsmesser. Die statistischen Parameter sind dann beispielsweise aus den Entfernungssignalen der Sensoranordnung abgeleitete Echointensitäten und/oder Pulsformen und/oder Signalstreuungen (d.h. Breiten der zeitlichen Variationen der reflektierten Signale) und/oder die Polarisation der elektromagnetischen Wellen und/oder Frequenzverschiebungen der elektromagnetischen Wellen und/oder Änderungen im Zeitverlauf der aus den Entfernungssignalen der Sensoranordnung abgeleiteten Größen.

Es bietet sich an, anhand der mit der Auswertungseinrichtung ermittelten Eigenschaft der aufzunehmenden Pflanzen mindestens einen Betriebsparameter der Erntemaschine einzustellen oder zu regeln, insbesondere die Vortriebsgeschwindigkeit und/oder die Größe eines Dreschkorbspalts und/oder die Drehgeschwindigkeit eines Reinigungsgebläses und/oder die Größe einer Sieböffnung.

Vorzugsweise berücksichtigt die Auswertungseinrichtung bei der Anwendung der Kalibrierdaten die Position der Erntemaschine im Feld und/oder bekannte Eigenschaften des Felds. Das bedeutet, dass zuvor ermittelte Kalibrierdaten mit Informationen hinsichtlich der Position, an der sie aufgenommen wurden, abgespeichert werden. Wenn die Erntemaschine sich nun wieder dieser Position nähert, sei es bei demselben Erntevorgang oder bei einem folgenden (z.B. nächstjährigen) Erntevorgang, werden diese Kalibrierdaten wieder verwendet. Analog können andere Eigenschaften des Felds bzw. der jeweiligen Position des Felds (z.B. Bodenart, Höhe über Normalnull, Größe und Orientierung einer Hangneigung) mit den Kalibrierdaten abgespeichert und die Kalibrierdaten anhand dieser Eigenschaften wieder abgerufen werden. Falls mehrere Erntemaschinen gleichzeitig auf einem Feld arbeiten und jeweils mit einer erfindungsgemäßen Anordnung ausgestattet sind, können sie die Kalibrierdaten und die erwähnten, zugehörigen Informationen hinsichtlich der Position im Feld und/oder der Eigenschaften des Felds auch drahtlos untereinander austauschen. Hierzu sei angemerkt, dass es anstelle einer Verwendung positions- und/oder feldeigenschaftenabhängiger Kalibrierdaten auch möglich ist, die Relevanz der Kalibrierdaten (sei es in Stufen oder stufenlos) abhängig von der Position bzw. Feldeigenschaft auszuwählen, d.h. die Kalibrierdaten in einem vom Abstand zur Position, an der sie gewonnen wurden, abhängigem Maße zu berücksichtigen.

Bei dem von der Auswertungseinrichtung zu lösenden Problem, die bekannten statistischen Parameter (und ggf. anderen Messwerte der Sensoreinrichtung) der oder den unbekannten Eigenschaft(en) des Ernteguts zuzuordnen, sind Zustände (Eigenschaft(en) des Ernteguts) unsichtbar, die von den Zuständen abhängigen Ausgaben (statistische Parameter) jedoch sichtbar. Für die Lösung eines derartigen Problems bietet sich die Verwendung eines versteckten Markov-Modells an, obwohl auch ein beliebiges anderes Bayes'sches Faktormodell genutzt werden kann.

Die erfindungsgemäße Anordnung kann insbesondere an selbstfahrenden oder von einem Fahrzeug gezogenen oder daran angebauten Erntemaschinen Verwendung finden, beispielsweise Mähdreschern, Ballenpressen oder Feldhäckslern.

### Ausführungsbeispiel

In den Zeichnungen ist ein nachfolgend näher beschriebenes Ausführungsbeispiel der Erfindung dargestellt. Es zeigt:
- Fig. 1: eine Seitenansicht einer Erntemaschine mit einer erfindungsgemäßen Anordnung zur vorausschauenden Untersuchung von mit einer Erntemaschine aufzunehmenden Pflanzen,
- Fig. 2: ein schematisches Diagramm für eine erste Vorgehensweise, nach dem die Anordnung arbeitet, und
- Fig. 3: ein schematisches Diagramm für eine zweite Vorgehensweise, nach dem die Anordnung arbeitet.

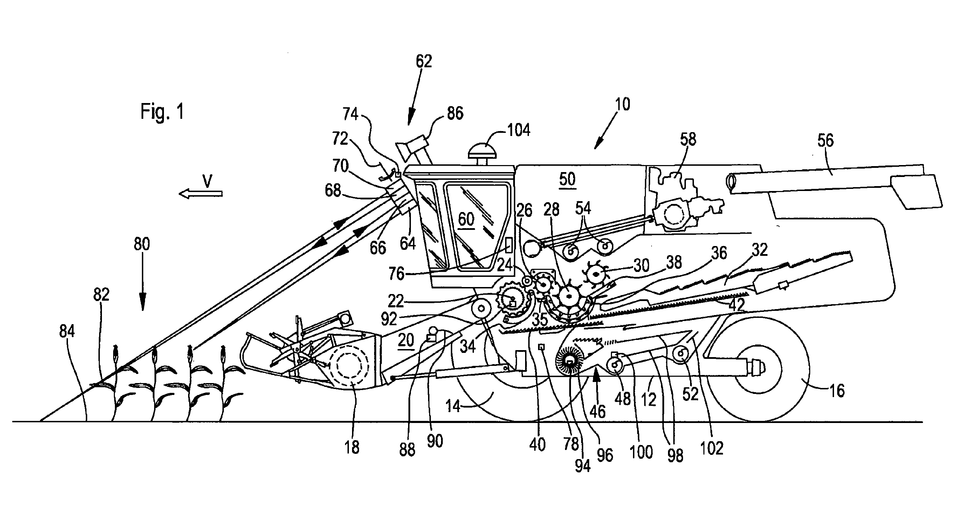

Die Figur 1 zeigt eine Erntemaschine 10 in Form eines selbstfahrenden Mähdreschers mit einem Rahmen 12, der sich über angetriebene vordere Räder 14 und lenkbare rückwärtige Räder 16 auf dem Boden abstützt und von diesen fortbewegt wird. Die Räder 14 werden mittels nicht gezeigter Antriebsmittel in Drehung versetzt, um die Erntemaschine 10 z. B. über ein abzuerntendes Feld zu bewegen. Im Folgenden beziehen sich Richtungsangaben, wie vorn und hinten, auf die Fahrtrichtung V der Erntemaschine 10 im Erntebetrieb.

An den vorderen Endbereich der Erntemaschine 10 ist eine Erntegutbergungsvorrichtung 18 in Form eines Schneidwerks abnehmbar angeschlossen, um beim Erntebetrieb Erntegut in Form von Getreide oder andere, dreschbare Halmfrüchten von dem Feld zu ernten und es nach oben und hinten durch einen Schrägförderer 20 einem Mehrtrommeldreschwerk zuzuführen, das - in Fahrtrichtung V hintereinander angeordnet - eine Dreschtrommel 22, eine Abstreiftrommel 24, eine oberschlächtig arbeitende Fördertrommel 26, einen Tangentialseparator 28 sowie eine Wendetrommel 30 umfasst. Stromab der Wendetrommel 30 befindet sich ein Strohschüttler 32. Die Dreschtrommel 22 ist in ihrem unteren und rückwärtigen Bereich von einem Dreschkorb 34 umgeben. Unterhalb der Fördertrommel 26 ist eine mit Öffnungen versehene oder geschlossene Abdeckung 35 angeordnet, während sich oberhalb der Fördertrommel 26 eine fest stehende Abdeckung und unterhalb des Tangentialseparators 28 ein Separierkorb 36 mit verstellbaren Fingerelementen befindet. Unterhalb der Wendetrommel 30 ist ein Fingerrechen 38 angeordnet.

Das durch den Dreschkorb 34, den Separierkorb 36 und die Strohschüttler 32 hindurchtretende, Körner und Verunreinigungen enthaltende Gemisch gelangt über Förderböden 40, 42 in eine Reinigungseinrichtung 46 mit einem Gebläse 96 und Sieben 98. Durch die Reinigungseinrichtung 46 gereinigtes Getreide wird mittels einer Körnerschnecke 48 einem nicht gezeigten Elevator zugeführt, der es in einen Korntank 50 befördert. Eine Überkehrschnecke 52 gibt unausgedroschene Ährenteile durch einen weiteren nicht gezeigten Elevator zurück in den Dreschprozess. Die Spreu kann an der Rückseite des oberen Siebes 98 durch einen rotierenden Spreuverteiler ausgeworfen werden, oder sie wird durch einen stromab des Strohschüttlers 32 angeordneten Strohhäcksler (nicht eingezeichnet) ausgetragen. Das gereinigte Getreide aus dem Korntank 50 kann durch ein Entladesystem mit Querschnecken 54 und einem Entladeförderer 56 entladen werden.

Die genannten Systeme werden mittels eines Verbrennungsmotors 58 angetrieben und von einem Bediener aus einer Fahrerkabine 60 heraus kontrolliert und gesteuert. Die verschiedenen Vorrichtungen zum Dreschen, Fördern, Reinigen und Abscheiden befinden sich innerhalb des Rahmens 12. Außerhalb des Rahmens 12 befindet sich eine Außenhülle, die größtenteils aufklappbar ist. Es bleibt anzumerken, dass das hier dargestellte Mehrtrommeldreschwerk nur ein Ausführungsbeispiel ist. Es könnte auch durch eine einzige quer angeordnete Dreschtrommel und eine nachgeordnete Trenneinrichtung mit einem Strohschüttler oder einem oder mehreren Trennrotoren oder eine im Axialfluss arbeitende Dresch- und Trenneinrichtung ersetzt werden.

An der Vorderseite der Fahrerkabine 60 ist in der Nähe des Daches eine Sensoranordnung 62 angeordnet, die mit einer Auswertungseinrichtung 76 verbunden ist. Die Messeinrichtung 62 könnte auch an der Erntegutbergungseinrichtung 18 angebracht werden. Die Auswertungseinrichtung 76 ist mit einer Geschwindigkeitsvorgabeeinrichtung 78 (beispielsweise eine Verstelleinrichtung für eine Taumelscheibe einer Hydraulikpumpe, die hydraulikflüssigkeitsleitend mit einem Hydraulikmotor verbunden ist, der die Räder 14 antreibt) verbunden, die zur Einstellung der Vortriebsgeschwindigkeit der Erntemaschine 10 eingerichtet ist.

Die Messeinrichtung 62 umfasst einen ersten Sender 64, einen ersten Empfänger 66, einen zweiten Sender 68 und einen zweiten Empfänger 70, die gemeinsam durch einen Schwenkantrieb 74 um eine etwa vertikale, leicht nach vorn geneigte Achse 72 drehbar sind. Im Betrieb überstreichen von den Sendern 64, 68 ausgesendete elektromagnetische Wellen einen vor der Messbereich vor dem Mähdrescher 10, indem die Sender 64, 68 und Empfänger 66, 70 (oder lediglich ihre Wellen abstrahlenden und/oder empfangenden Elemente) um die Achse 72 verschwenkt werden. Dadurch wird das Feld 80 mit den darauf stehenden Pflanzen 82 entlang einer Messrichtung, die sich in einem kreissegmentförmigen Bogen vor dem Mähdrescher 10 erstreckt, sukzessive überstrichen.

Der erste Sender 64 strahlt elektromagnetische erste Wellen in Form von Licht im (nah-) infraroten oder sichtbaren Wellenbereich aus, während der erste Empfänger 66 nur für dieses Licht sensitiv ist. Aufgrund der gewählten Wellenlänge wird das Licht von den Pflanzen 82 reflektiert, wenn es auf sie trifft. Wenn das Licht hingegen zwischen Pflanzen hindurch (z. b. in dünnen oder fehlenden Beständen) auf den Erdboden 84 trifft, wird es auch vom Erdboden reflektiert. Der erste Sender 64 umfasst vorzugsweise einen Laser zur Erzeugung des Lichts.

Der zweite Sender 68 strahlt elektromagnetische zweite Wellen im Mikro- oder Radarwellenbereich ab, während der zweite Empfänger 70 nur für diese Wellen empfindlich ist. Die Wellenlänge ist derart gewählt, dass der größte Teil der zweiten Wellen die Pflanzen durchdringt und nur vom Erdboden 84 reflektiert wird. Ein gewisser, wenn auch kleinerer Anteil der zweiten Wellen wird auch von den Pflanzen 82 reflektiert.

Die von den Sendern 64, 68 abgestrahlten elektromagnetischen Wellen erreichen den Erdboden 84 im Abstand von einigen Metern (beispielsweise 10 m) in der Fahrtrichtung des Mähdreschers 10 vor der Erntegutbergungsvorrichtung 18. Die von den Sendern 64, 68 abgestrahlten Wellen können amplituden- oder anderweitig moduliert sein, um das Signal/Rausch-Verhältnis zu verbessern. Über eine Laufzeitmessung bewerkstelligt die Auswertungseinrichtung 76 eine Erfassung des Abstands und/oder einer anderen Messgröße zwischen der Messeinrichtung 62 und dem Punkt, an dem die Wellen jeweils reflektiert wurden. Der Schwenkantrieb 74 kann als Servo- oder Schrittmotor ausgeführt sein und verschwenkt die Messeinrichtung 62 (oder lediglich ihre Wellen abstrahlenden und/oder empfangenden Elemente) kontinuierlich oder schrittweise um einen Winkelbereich von beispielsweise 30° um die Achse 72 hin und her. Die Auswertungseinrichtung 76 ist eingerichtet, für jeden Schwenkwinkel der Messeinrichtung 62 den jeweiligen Winkel um die Achse 72 und die Laufzeit der Welle bzw. den Abstand des Empfängers 66, 70 und Senders 64, 68 vom Reflexionspunkt zu erfassen. Es wäre auch möglich, aus den Signalen der Empfänger 66, 70 die Echointensitäten und/oder Pulsformen und/oder Signalstreuungen und/oder die Polarisation der empfangenen elektromagnetischen Wellen und/oder Frequenzverschiebungen der empfangenen elektromagnetischen Wellen und/oder Änderungen im Zeitverlauf aus den Entfernungssignalen der Sensoranordnung 62 abgeleiteter Größen abzuleiten und bei der späteren Auswertung zu berücksichtigen. Anschließend wird der Schwenkantrieb 74 aktiviert und die Messeinrichtung 62 in eine andere Stellung verbracht. Der Auswertungseinrichtung 74 liegt eine Information über den jeweiligen Winkel des der Messeinrichtung 62 vor, da sie den Schwenkantrieb 74 steuert. Denkbar wäre auch ein separater Sensor zur Erfassung des Schwenkwinkels, wobei der Servo- oder Schrittmotor durch einen beliebigen Motor ersetzt werden kann. Der Winkel der Messeinrichtung 62 um die Achse 72 definiert eine Messrichtung, entlang der die Laufzeiten der Wellen der Senders 64, 68 zum zugehörigen Empfänger 66, 70 ermittelt werden. Sie erstreckt sich horizontal und kreisbogenförmig quer zur Vorwärtsrichtung der Erntemaschine 10.

Die Signale des ersten Empfängers 66 enthalten eine Information über die Höhe der oberen Enden der Pflanzen 82, denn dort werden sie in erster Linie reflektiert. Einige erste Wellen dringen jedoch in dünneren Beständen weiter nach unten vor, zum Teil bis zum Erdboden 84, und werden erst dort reflektiert und vom ersten Empfänger 66 empfangen. In dünneren Beständen variieren die vom ersten Empfänger 66 erfassten Abstände demnach stärker als in dichteren Beständen. Diese unterschiedlichen, von der Bestandsdichte abhängigen Variationen der Abstände werden von der Auswertungseinrichtung 74 evaluiert und zur Bestimmung der Dichte des Pflanzenbestandes herangezogen. Weiterhin dienen die Messwerte des zweiten Empfängers 70 zur Bestimmung eines Bodenprofils, das in Verbindung mit den mit dem ersten Empfänger 66 erfassten Höhen der Oberseiten der Pflanzen 82 zu einer genaueren Bestimmung der Pflanzenhöhen verwendet wird, welche ebenfalls zur Bestimmung der Pflanzenmenge herangezogen werden.

Die Sensoranordnung 62 umfasst weiterhin eine Kamera 86, die vom Dach der Kabine 60 aus schräg nach unten und vorn auf das Feld 80 mit den darauf vor der Erntegutbergungsvorrichtung 18 stehenden Pflanzen 82 blickt. Die Signale der Kamera 86 werden ebenfalls der Auswertungseinrichtung 76 zugeführt. Bei möglichen Ausführungsformen der Erfindung kann die Kamera 86 oder einer oder beide Entfernungsmesser 64, 66, 68, 70 entfallen.

Weiterhin ist die Erntemaschine 10 mit mehreren Messeinrichtungen 88, 92, 94, 100 und 102 ausgestattet, die jeweils direkt oder indirekt Eigenschaften der geernteten Pflanzen 82 erfassen und ihre Signale an die Auswertungseinrichtung 76 übergeben. Die Messeinrichtung 88 erfasst die Winkelstellung eines drehbar gelagerten Tasters 90, der mit der Erntegutmatte im Schrägförderer 20 zusammenwirkt. Die Messeinrichtung 88 erfasst demnach die Schichtdicke der Pflanzen 82 im Schrägförderer 20. Die Messeinrichtung 92 erfasst das Antriebsmoment bzw. die Antriebsleistung der Dreschtrommel 22, das oder die wiederum von der Menge (Volumen und Masse) der aufgenommenen Pflanzen 82 abhängt. Die Messeinrichtung 94 erfasst das Antriebsmoment bzw. die Antriebsleistung des Gebläses 96, das oder die von der Belegung der Siebe 98 abhängt. Die Messeinrichtung 100 umfasst eine Kamera und ein Nahinfrarotspektrometer, die mit dem von der Körnerschnecke 48 geförderten, gereinigten Korn zusammenwirken und einerseits mittels der Kamera und einer Bildverarbeitung die Reinheit des Korns und den Bruchkornanteil im gereinigten Korn und andererseits mittels des Nahinfrarotspektrometers die Kornfeuchte ermitteln. Hierzu sei auf die Offenbarung der DE 10 2007 007 040 A1 verwiesen. Schließlich erfasst eine Messeinrichtung 102 Verlustkörner am Auslauf des oberen Siebes 98.

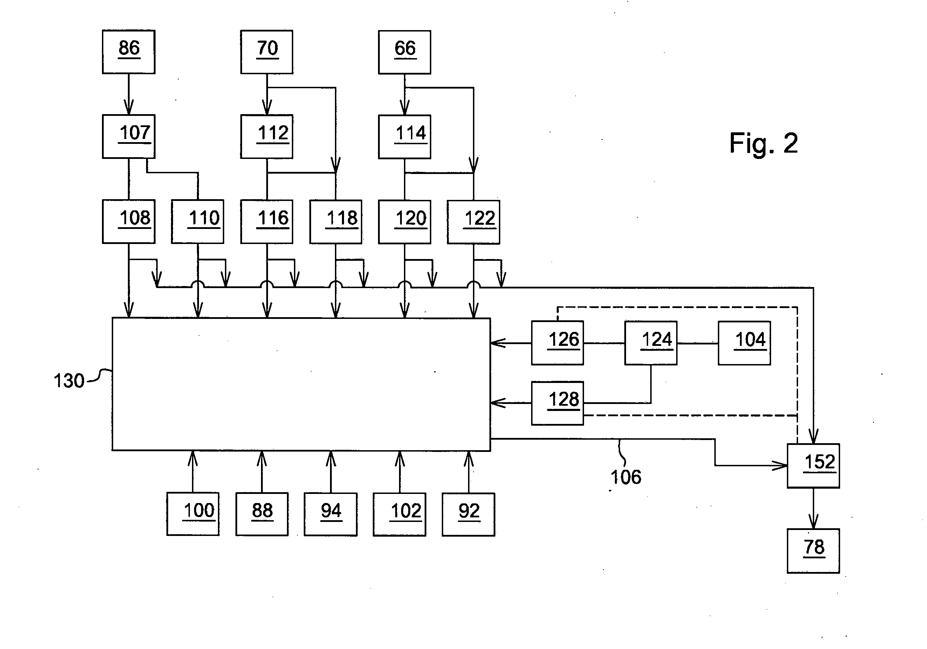

Die Figur 2 verdeutlicht die Arbeitsweise der erfindungsgemäßen Anordnung zur vorausschauenden Untersuchung von mit einer Erntemaschine aufzunehmenden Pflanzen im Betrieb. Dabei werden in einem Lernvorgang (linker Teil der Figur) die Signale von der Sensoranordnung 62 mit der Kamera 86 und den Empfängern 66, 70 einerseits und die Signale von den Messeinrichtungen 88, 92, 94, 100 und 102 andererseits ausgewertet, um Kalibrierdaten 106 zu erzeugen, die anschließend (oder gleichzeitig) bei einem Anwendungsvorgang (rechter Teil der Figur) verwendet werden, um die Signale von der Sensoranordnung 62 u.a. in Steuersignale für die Geschwindigkeitsvorgabeeinrichtung 78 zu verwandeln. Die Kalibrierdaten 106 werden basierend auf Signalen eines Empfängers 104 für Signale eines satellitenbasierten Positionsbestimmungssystems (z. B. GPS, Glonass oder Galileo) georeferenziert erzeugt und abgespeichert. Die Signale des Empfängers 104 können auch durch Radsensoren zur Geschwindigkeitsmessung und Kreisel zur Richtungsmessung ergänzt oder ersetzt werden.

Im Detail werden aus den Signalen der Kamera 86 mittels einer Bildverarbeitung 107, die in die Auswertungseinrichtung 76 oder in das Gehäuse der Kamera 86 integriert oder als selbsttätige Einheit ausgeführt sein kann, statistische Parameter 108, 110 berechnet. Der statistische Parameter 108 ist ein Histogramm für die Farben und/oder Helligkeiten der Pflanzen 82. Der statistische Parameter 110 umfasst Texturparameter der Pflanzen, beispielsweise die lokalen Abmessungen (Dicke und/oder Länge) der Pflanzen, die Standardabweichung der lokalen Abmessungen (Dicke und/oder Länge) der Pflanzen und die lokale Entropie (Unordnung bzw. Ordnung, d.h. die Ausgerichtetheit) der Pflanzen. Diese(r) statistische Parameter können aus dem gesamten Bild der Kamera 86 oder aus Teilen des Bilds der Kamera abgeleitet werden, insbesondere solchen Teilen, welche ein repräsentatives Bild des Ernteguts enthalten. Die übrigen Bereiche des Bilds der Kamera 86 können ignoriert oder für andere Zwecke, z.B. zum Lenken, verwendet werden.

Weiterhin veranlasst die Auswertungseinrichtung 76 im Betrieb den Schwenkantrieb 74, mit den Sendern 64, 68 und den Empfängern 66, 70 einen bestimmten Winkelbereich vor der Erntemaschine 10 stufenweise (oder kontinuierlich) zu überstreichen. Dabei werden die jeweiligen Schwenkwinkel und Abstandsmesswerte durch die Auswertungseinrichtung 76 abgespeichert. Es entsteht ein erstes Entfernungsbild 112 des ersten Empfängers 66 und ein zweites Entfernungsbild 114 des zweiten Empfängers 70. Aus dem ersten Entfernungsbild 112 und den Signalen des ersten Empfängers 66 werden statistische Parameter 116, 118 abgeleitet, wobei in einer Ausführungsform der Erfindung der eine statistische Parameter 116 die Standardabweichung im Entfernungsbild 112 und der andere statistische Parameter 118 ein Histogramm für die Intensität des empfangenen Lichts über die Zeit beinhaltet. Aus dem zweiten Entfernungsbild 114 und den Signalen des zweiten Empfängers 70 werden statistische Parameter 120, 122 abgeleitet, wobei der eine statistische Parameter 120 die Standardabweichung im Entfernungsbild 114 und der andere statistische Parameter 122 ein Histogramm für die Intensität der empfangenen Wellen über die Zeit beinhaltet.

Hierbei ist es unproblematisch möglich zu erkennen, wenn die Erntemaschine 10 einen bereits abgeernteten Bereich des Felds überfährt. Dort gewonnene Signale werden von der Auswertungseinrichtung 76 ignoriert.

Die Positionssignale des Empfängers 104 werden mittels einer abgespeicherten Karte 124 in Daten 126 hinsichtlich des aktuellen Standorts der Erntemaschine 10, z.B. hinsichtlich der Bodenart und/oder der Topographie (z.B. Betrag und der Richtung der Bodenneigung und Höhe über Normalnull), umgewandelt und außerdem als Positionssignale 128 bereitgestellt.

Schließlich erzeugen die Messeinrichtungen 88, 92, 94, 100 und 102 die oben beschriebenen Signale hinsichtlich der jeweils erfassten Eigenschaften der geernteten Pflanzen 82. Einem Evaluator 130 der Auswertungseinrichtung werden die statistischen Parameter 108, 110, 116, 118, 120, 122, die Positionssignale 128 und Daten 126 sowie die Signale der Messeinrichtungen 88, 92, 94, 100 und 102 zugeführt. Dabei werden jeweils Signale verknüpft, die zumindest näherungsweise denselben Pflanzen 82 zuzuordnen sind, d.h. es werden die jeweiligen Zeit- und Ortsunterschiede bei der Aufnahme der Signale und Daten berücksichtigt. Der Evaluator 130 ist in der Lage, unter Verwendung eines versteckten Markov-Modells bzw. dynamischen Bayes'schen Einflussfaktormodells selbsttätig die Zusammenhänge zwischen den aus den Signalen der Sensoranordnung 62 abgeleiteten statistischen Parametern 108, 110, 116, 118, 120, 122 und den Signalen der Messeinrichtungen 88, 92, 94, 100 und 102 zu bestimmen und anhand dieser nun bestimmten Zusammenhänge die Kalibrierdaten 106 zu generieren. Zu den Einzelheiten des versteckten Markov-Modells sei auf die Fachliteratur (vgl. http://en.wikipedia.org/wiki/Hidden_Markov_model und die dort genannten Referenzen) verwiesen.

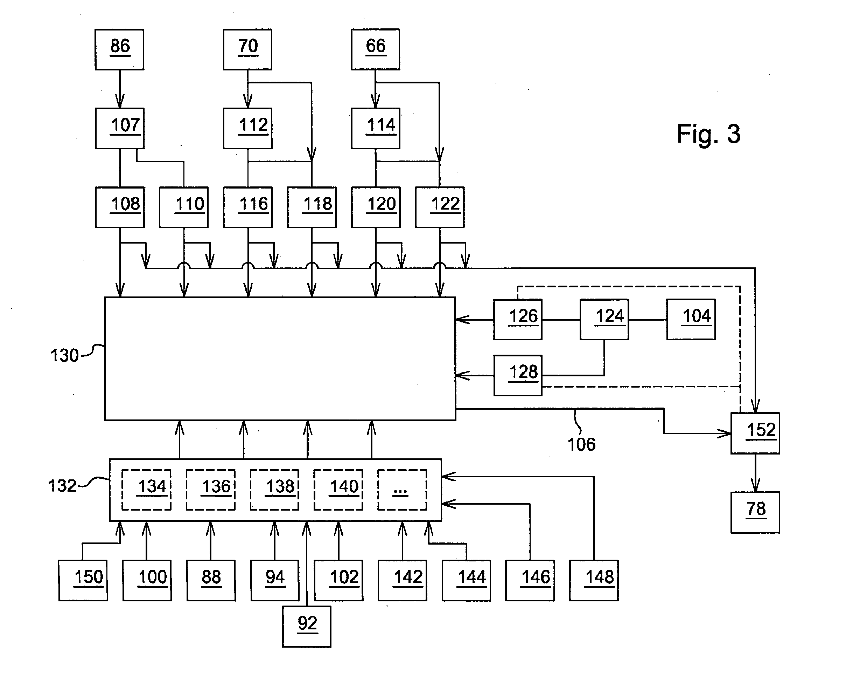

Bei der zweiten Ausführungsform nach Figur 3 wird im Unterschied zur Ausführungsform nach Figur 2 noch ein separates Modell 132 verwendet, das aus den Signalen der Signalen der Messeinrichtungen 88, 92, 94, 100 und 102 und Signalen eines oder mehrerer weiterer Sensoren (Sensor 142 für Trennverluste des Schüttlers 32 bzw. einer axialen Trenneinrichtung; Sensor 144 für das Überkehrvolumen, Sensor 146 für die Schnitthöhe, Sensor 148 für die Vortriebsgeschwindigkeit und Daten 150 zur Arbeitsbreite der Erntegutbergungsvorrichtung 18) zunächst Eigenschaften des Ernteguts bzw. des Feldes berechnet, nämlich die Erntegutfeuchte 134, das Volumen des Ernteguts 136, den Kornertrag 138 und die Befahrbarkeit 140 des Felds, und ggf. noch weitere Eigenschaften des Ernteguts und/oder Felds. Hierbei wird ein statisches Modell 132 für die Umrechnung der auf der Erntemaschine 10 gewonnenen Messgrößen in die Eigenschaften des Ernteguts bzw. des Feldes verwendet. Die durch das Modell 132 berechneten Eigenschaften des Ernteguts bzw. des Feldes werden (anstelle der Signale der Messeinrichtungen 88, 92, 94, 100, 102 gemäß der ersten Ausführungsform nach Figur 2) dann dem Evaluator 130 zugeführt. Die Eigenschaften des Felds (insbesondere hinsichtlich der Befahrbarkeit) können auch an andere Maschinen, insbesondere Transportfahrzeuge zum Abtransport des Ernteguts oder Fahrzeuge für die nachfolgende Bodenbearbeitung übersandt werden.

Zur Einstellung der Vortriebsgeschwindigkeit der Erntemaschine 10 mittels der Geschwindigkeitsvorgabeeinrichtung 78 und/oder anderer Arbeitsparameter der Erntemaschine 10, wie beispielsweise der Dreschtrommeldrehzahl, des Dreschtrommelspalts, der Gebläsedrehzahl oder der Sieböffnung werden durch eine Kontrolleinheit 152, die Teil der Auswertungseinrichtung 76 ist und in ihr Gehäuse integriert oder als separate Einheit ausgeführt sein kann, die Kalibrierdaten 106 und die Messwerte der Sensoreinrichtung 62 in Form der Signale der Kamera 86 und der Empfänger 70, 66 verwendet, um die Arbeitsparameter der Erntemaschine 10 selbsttätig einzustellen. Hierzu werden insbesondere die statistischen Parameter 108, 110, 116, 118, 120, 122 der Kontrolleinheit 152 zugeführt, obwohl auch zusätzlich die Entfernungsbilder 112, 114 und die Signale der Bildverarbeitung 107 der Kontrolleinheit 152 zugeführt werden können. Der Kontrolleinheit 152 könnten als Rückkopplungsdaten auch die Signale der Messeinrichtungen 88, 92, 94, 100, 102 zugeführt werden. Bei der Ausführungsform nach Figur 3 können der Kontrolleinheit auch alternativ oder zusätzlich als Rückkopplungsdaten die mittels des Modells 130 berechneten Eigenschaften des Ernteguts und/oder des Felds zugeführt werden.

Die Kontrolleinheit 152 ist somit in der Lage, anhand der Kalibrierdaten 106 und der jeweils gemessenen statistischen Parameter 108, 110, 116, 118, 120, 122 und ggf. weiterer Daten von der Sensoreinrichtung 62 die jeweils aktuellen Eigenschaften (wie insbesondere den Durchsatz) der demnächst aufzunehmenden Pflanzen 82 zu bestimmen und darauf basierend die Geschwindigkeitsvorgabeeinrichtung 78 und/oder die anderen erwähnten Arbeitsparameter der Erntemaschine 10 vorausschauend einzustellen. Da die Kalibrierdaten 106 georeferenziert und mit Informationen über die jeweilige Bodenart und/oder Topographie des Felds abgespeichert sind, werden von der Kontrolleinheit 152 Kalibrierdaten 106, die in der Nähe der jeweiligen Position und/oder bei einer ähnlichen Bodenart und/oder Topographie gewonnen wurden, in einem höheren Maße (oder ausschließlich) berücksichtigt als weiter beabstandet oder bei anderer Bodenart und/oder Topographie gewonnene Kalibrierdaten 106.

Die Kalibrierdaten 106 können kontinuierlich generiert werden, wobei ältere Kalibrierdaten entweder gelöscht oder mit Zeitablauf in sinkendem Maße berücksichtigt oder beibehalten und mit den jüngeren Kalibrierdaten kombiniert werden können, oder sie werden nur über einen bestimmten Zeitraum generiert und für längere Zeit, möglicherweise bis zur nächsten Ernte oder noch länger, abgespeichert und von der Kontrolleinheit 152 verwendet.

Die vorliegende Erfindung eignet sich nicht nur für stehende Pflanzen 84, wie zuvor beschrieben, sondern auch für in einem Schwad oder flächig liegende Pflanzen.

## Patentansprüche

1. Anordnung zur vorausschauenden Untersuchung von mit einer Erntemaschine (10) aufzunehmenden Pflanzen (82), umfassend:
eine berührungslos mit Pflanzen (82) auf einem Feld zusammenwirkende Sensoranordnung (62) zur Erzeugung von Signalen hinsichtlich mindestens einer Eigenschaft der Pflanzen (82),
eine Messeinrichtung (88, 92, 94, 100, 102) zur Erfassung einer Eigenschaft von tatsächlich von der Erntemaschine (10) aufgenommenen Pflanzen (82),
und eine Auswertungseinrichtung (76) zur Erzeugung von Kalibrierdaten (106) anhand von Signalen der Messeinrichtung (88, 92, 94, 100, 102) und aus den Signalen der Sensoranordnung (62) abgeleiteten statistischen Parametern (108, 110, 116, 118, 120, 122), sowie zur Berechnung der Eigenschaft von aufzunehmenden Pflanzen (82) anhand statistischer Parameter (108, 110, 116, 118, 120, 122), welche aus den den aufzunehmenden Pflanzen (82) zugehörigen Signalen der Sensoranordnung (62) abgeleitet sind, und der Kalibrierdaten (106),
**dadurch gekennzeichnet, dass** die Auswertungseinrichtung (76) betreibbar ist, selbsttätig Zusammenhänge zwischen den aus den Signalen der Sensoranordnung (62) abgeleiteten statistischen Parametern (108, 110, 116, 118, 120, 122) und den Signalen der Messeinrichtung (88, 92, 94, 100, 102) zu bestimmen und diese bestimmten Zusammenhänge bei der Berechnung der Eigenschaft der aufzunehmenden Pflanzen (82) zu berücksichtigen.

2. Anordnung nach Anspruch 1, **dadurch gekennzeichnet, dass** die Eigenschaft der Pflanzen (82) die gesamte Bestandsdichte der Pflanzen und/oder die Bestandsdichte der Pflanzen an Korn und/oder Stroh und/oder die Feuchtigkeit der Pflanzen (82) ist.

3. Anordnung nach Anspruch 1 oder 2, **dadurch gekennzeichnet, dass** die Messeinrichtung (88, 92, 94, 100, 102) direkt mit dem von der Erntemaschine (10) aufgenommenen oder verarbeiteten Pflanzen (82) zusammenwirkt und/oder einen Betriebswert einer Erntegutförder- und/oder -bearbeitungseinrichtung erfasst, beispielsweise die Schichtdicke in einem Schrägförderer (20) und/oder die Antriebsleistung einer Drescheinrichtung (22) und/oder Verluste einer Trenneinrichtung (32) und/oder Verluste einer Reinigungseinrichtung (46) und/oder ein Überkehrvolumen und/oder die Reinheit gereinigten Korns.

4. Anordnung nach einem der Ansprüche 1 bis 3, **dadurch gekennzeichnet, dass** die Sensoranordnung (62) an der Erntemaschine (10) oder an einem separaten Land- oder Luftfahrzeug oder einem Satelliten angebracht ist.

5. Anordnung nach einem der vorhergehenden Ansprüche, **dadurch gekennzeichnet, dass** die Sensoranordnung (62) eine Kamera (86) umfasst, und dass die statistischen Parameter aus dem Bild und/oder Teilbildern der Kamera (86) abgeleitete Texturparameter (110) und/oder Farbhistogramme (108) sind.

6. Anordnung nach einem der vorhergehenden Ansprüche, **dadurch gekennzeichnet, dass** die Sensoranordnung (62) einen mit elektromagnetischen Wellen die Pflanzen abtastenden Entfernungsmesser (64, 66, 68, 70) umfasst und dass die statistischen Parameter (116, 118, 120,122) aus den Entfernungssignalen der Sensoranordnung (62) abgeleitete Echointensitäten und/oder Pulsformen und/oder Signalstreuungen und/oder die Polarisation der elektromagnetischen Wellen und/oder Frequenzverschiebungen der elektromagnetischen Wellen und/oder Änderungen im Zeitverlauf der aus den Entfernungssignalen der Sensoranordnung (62) abgeleiteten Größen sind.

7. Anordnung nach einem der vorhergehenden Ansprüche, **dadurch gekennzeichnet, dass** die Auswertungseinrichtung (76) eingerichtet ist, anhand der ermittelten Eigenschaft der aufzunehmenden Pflanzen (82) mindestens einen Betriebsparameter der Erntemaschine (10) einzustellen oder zu regeln, insbesondere die Vortriebsgeschwindigkeit und/oder die Größe eines Dreschkorbspalts und/oder die Drehgeschwindigkeit eines Reinigungsgebläses (96) und/oder die Größe einer Sieböffnung.

8. Anordnung nach einem der vorhergehenden Ansprüche, **dadurch gekennzeichnet, dass** die Auswertungseinrichtung (76) betreibbar ist, bei der Anwendung der Kalibrierdaten (106) die Position der Erntemaschine (10) im Feld und/oder bekannte Eigenschaften des Felds zu berücksichtigen.

9. Anordnung nach einem der vorhergehenden Ansprüche, **dadurch gekennzeichnet, dass** die Auswertungseinrichtung (76) betreibbar ist, zur selbsttätigen Bestimmung der Zusammenhänge zwischen den aus den Signalen der Sensoranordnung (62) abgeleiteten statistischen Parametern (108, 110, 116, 118, 120, 122) und den Signalen der Messeinrichtung (88, 92, 94, 100, 102) ein Bayessches Faktormodell, insbesondere ein verstecktes Markov-Modell, zu verwenden.

10. Anordnung nach einem der vorhergehenden Ansprüche, **dadurch gekennzeichnet, dass** die Auswertungseinrichtung (76) betreibbar ist, anhand der Signale der Messeinrichtung (88, 92, 94, 100, 102) anhand eines statischen Modells (132) Eigenschaften des Ernteguts und/oder des Feldes, wie beispielsweise die Erntegutfeuchte (134), das Volumen des Ernteguts (136), den Kornertrag (138) und/oder die Befahrbarkeit (140) des Felds, zu bestimmen und die Kalibrierdaten (106) anhand der berechneten Eigenschaften des Ernteguts und/oder des Feldes zu bestimmen.

11. Erntemaschine (10) mit einer Anordnung nach einem der vorhergehenden Ansprüche.

12. Verfahren zur vorausschauenden Untersuchung von mit einer Erntemaschine (10) aufzunehmenden Pflanzen (82), mit folgenden Schritten:
Erzeugung von Signalen hinsichtlich mindestens einer Eigenschaft der Pflanzen (82) mittels einer berührungslos mit Pflanzen (82) auf einem Feld zusammenwirkenden Sensoranordnung (62),
Erfassung einer Eigenschaft von tatsächlich von der Erntemaschine (10) aufgenommenen Pflanzen mittels einer Messeinrichtung (88, 92, 94, 100, 102),
Erzeugung von Kalibrierdaten (106) anhand von Signalen der Messeinrichtung (88, 92, 94, 100, 102) und aus den Signalen der Sensoranordnung (62) abgeleiteten statistischen Parametern (108, 110, 116, 118, 120, 122) mittels einer Auswertungseinrichtung (76), sowie Berechnung der Eigenschaft von aufzunehmenden Pflanzen (82) anhand statistischer Parameter (108, 110, 116, 118, 120, 122), welche aus den den aufzunehmenden Pflanzen (82) zugehörigen Signalen der Sensoranordnung (62) abgeleitet sind, und der Kalibrierdaten (106) mittels der Auswertungseinrichtung (76),
**dadurch gekennzeichnet, dass** die Auswertungseinrichtung (76) selbsttätig Zusammenhänge zwischen den aus den Signalen der Sensoranordnung (62) abgeleiteten statistischen Parametern (108, 110, 116, 118, 120, 122) und den Signalen der Messeinrichtung (88, 92, 94, 100, 102) bestimmt und diese Zusammenhänge bei der Berechnung der Eigenschaft der aufzunehmenden Pflanzen (82) berücksichtigt.

## Claims

1. Assembly for the predictive investigation of plants (82) to be picked up with a harvester (10), comprising:
a sensor assembly (62) interacting contactlessly with plants (82) in a field and intended for generating signals concerning at least one property of the plants (82),
a measuring device (88, 92, 94, 100, 102) intended for detecting a property of plants (82) actually picked up by the harvester (10),
and an evaluation device (76) intended for generating calibration data (106) on the basis of signals of the measuring device (88, 92, 94, 100 102) and statistical parameters (108, 110, 116, 118, 120, 122) derived from the signals of the sensor assembly (62), and also intended for calculating the property of plants (82) to be picked up on the basis of statistical parameters (108, 110, 116, 118, 120, 122) that are derived from the signals of the sensor assembly (62) associated with the plants (82) to be picked up and the calibration data (106),
**characterized in that** the evaluation device (76) can be operated to determine automatically relationships between the statistical parameters (108, 110, 116, 118, 120, 122) derived from the signals of the sensor assembly (62) and the signals of the measuring device (88, 92, 94, 100, 102) and to take into account these determined relationships when calculating the property of the plants (82) to be picked up.

2. Assembly according to Claim 1, **characterized in that** the property of the plants (82) is the overall density of the stand of plants and/or the density of the stand of plants in terms of grain and/or straw and/or the moisture of the plants (82).

3. Assembly according to Claim 1 or 2, **characterized in that** the measuring device (88, 92, 94, 100, 102) interacts directly with the plants (82) picked up or processed by the harvester (10) and/or detects an operating value of a harvested crop conveying and/or crop processing device, for example the layer thickness in an inclined conveyor (20) and/or the driving power of a threshing device (22) and/or losses of a separating device (32) and/or losses of a cleaning device (46) and/or a returns volume and/or the cleanness of cleaned grain.

4. Assembly according to one of Claims 1 to 3, **characterized in that** the sensor assembly (62) is attached to the harvester (10) or to a separate land vehicle or aircraft or satellite.

5. Assembly according to one of the preceding claims, **characterized in that** the sensor assembly (62) comprises a camera (86), and **in that** the statistical parameters are texture parameters (110) and/or colour histograms (108) derived from the image and/or partial images of the camera (86).

6. Assembly according to one of the preceding claims, **characterized in that** the sensor assembly (62) comprises a range finder (64, 66, 68, 70), which scans the plants with electromagnetic waves, and **in that** the statistical parameters (116, 118, 120, 122) are echo intensities derived from the distance signals of the sensor assembly (62), and/or pulse shapes and/or signal scatterings and/or the polarization of the electromagnetic waves and/or frequency shifts of the electromagnetic waves and/or changes in the course over time of the variables derived from the distance signals of the sensor assembly (62).

7. Assembly according to one of the preceding claims, **characterized in that** the evaluation device (76) is designed to adjust or regulate on the basis of the determined property of the plants (82) to be picked up at least one operating parameter of the harvester (10), in particular the advancing speed and/or the size of a thresher basket gap and/or the rotational speed of a cleaning blower (96) and/or the size of a screen aperture.

8. Assembly according to one of the preceding claims, **characterized in that** the evaluation device (76) can be operated to take into account the position of the harvester (10) in the field and/or known properties of the field during the application of the calibration data (106).

9. Assembly according to one of the preceding claims, **characterized in that** the evaluation device (76) can be operated to use a Bayes factor model, in particular a hidden Markov model, for the automatic determination of the relationships between the statistical parameters (108, 110, 116, 118, 120, 122) derived from the signals of the sensor assembly (62) and the signals of the measuring device (88, 92, 94, 100, 102).

10. Assembly according to one of the preceding claims, **characterized in that** the evaluation device (76) can be operated to determine from the signals of the measuring device (88, 92, 94, 100, 102) on the basis of a statistical model (132) properties of the harvested crop and/or of the field, such as for example the moisture of the harvested crop (134), the volume of the harvested crop (136), the grain yield (138) and/or the navigability (140) of the field and to determine the calibration data (106) on the basis of the calculated properties of the harvested crop and/or of the field.

11. Harvester (10) with an assembly according to one of the preceding claims.

12. Method for the predictive investigation of plants (82) to be picked up with a harvester (10), comprising the following steps:
generating signals concerning at least one property of the plants (82) by means of a sensor assembly (62) interacting contactlessly with plants (82) in a field,
detecting a property of plants actually picked up by the harvester (10) by means of a measuring device (88, 92, 94, 100, 102),
generating calibration data (106) on the basis of signals of the measuring device (88, 92, 94, 100, 102) and statistical parameters (108, 110, 116, 118, 120, 122) derived from the signals of the sensor assembly (62) by means of an evaluation device (76), and also calculating the property of plants (82) to be picked up on the basis of statistical parameters (108, 110, 116, 118, 120, 122) that are derived from the signals of the sensor assembly (62) associated with the plants (82) to be picked up and the calibration data (106) by means of the evaluation device (76),
**characterized in that** the evaluation device (76) automatically determines relationships between the statistical parameters (108, 110, 116, 118, 120, 122) derived from the signals of the sensor assembly (62) and the signals of the measuring device (88, 92, 94, 100, 102) and takes into account these relationships when calculating the property of the plants (82) to be picked up.

## Revendications

1. Arrangement d'analyse anticipée de plantes (82) à ramasser avec une moissonneuse (10), comprenant :
un arrangement de détection (62) qui coopère sans contact avec des plantes (82) sur un champ pour générer des signaux concernant au moins une propriété des plantes (82),
un dispositif de mesure (88, 92, 94, 100, 102) destiné à acquérir une propriété des plantes (82) réellement ramassées par la moissonneuse (10),
et un dispositif d'interprétation (76) destiné à générer des données de calibrage (106) à l'aide de signaux du dispositif de mesure (88, 92, 94, 100, 102) et de paramètres statistiques (108, 110, 116, 118, 120, 122) dérivés des signaux de l'arrangement de détection (62) ainsi qu'à calculer la propriété des plantes (82) à ramasser à l'aide des paramètres statistiques (108, 110, 116, 118, 120, 122) qui sont dérivés des signaux de l'arrangement de détection (62) associés aux plantes (82) à ramasser et des données de calibrage (106),
**caractérisé en ce que** le dispositif d'interprétation (76) peut être mis en oeuvre afin de déterminer automatiquement des relations entre les paramètres statistiques (108, 110, 116, 118, 120, 122) dérivés des signaux de l'arrangement de détection (62) et les signaux du dispositif de mesure (88, 92, 94, 100, 102) et de tenir compte de ces relations déterminées lors du calcul de la propriété des plantes (82) à ramasser.

2. Arrangement selon la revendication 1, **caractérisé en ce que** la propriété des plantes (82) est la densité de population totale des plantes et/ou la densité de population des plantes en termes de grains et/ou de paille et/ou l'humidité des plantes (82).

3. Arrangement selon la revendication 1 ou 2, **caractérisé en ce que** le dispositif de mesure (88, 92, 94, 100, 102) coopère directement avec les plantes (82) ramassées ou traitées par la moissonneuse (10) et/ou acquiert une valeur opérationnelle d'un dispositif de convoyage et/ou de traitement de matière moissonnée, par exemple l'épaisseur de couche dans un convoyeur incliné (20) et/ou la puissance d'entraînement d'un dispositif de battage (22) et/ou les pertes d'un dispositif de séparation (32) et/ou les pertes d'un dispositif de nettoyage (46) et/ou un volume d'ôtons et/ou la pureté des grains nettoyés.

4. Arrangement selon l'une des revendications 1 à 3, **caractérisé en ce que** l'arrangement de détection (62) est monté sur la moissonneuse (10) ou sur un véhicule terrestre ou aérien séparé ou un satellite.

5. Arrangement selon l'une des revendications précédentes, **caractérisé en ce que** l'arrangement de détection (62) comprend une caméra (86) et **en ce que** les paramètres statistiques sont des paramètres de texture (110) et/ou des histogrammes de couleurs (108) dérivés de l'image et/ou d'images partielles de la caméra (86).

6. Arrangement selon l'une des revendications précédentes, **caractérisé en ce que** l'arrangement de détection (62) comprend un télémètre (64, 66, 68, 70) qui balaye les plantes avec des ondes électromagnétiques et **en ce que** les paramètres statistiques (116, 118, 120, 122) sont des intensités d'écho dérivées des signaux de distance de l'arrangement de détection (62) et/ou des formes d'impulsions et/ou des dispersions de signaux et/ou la polarisation des ondes électromagnétiques et/ou des décalages de fréquence des ondes électromagnétiques et/ou des modifications dans le tracé dans le temps des grandeurs dérivées des signaux de distance de l'arrangement de détection (62).

7. Arrangement selon l'une des revendications précédentes, **caractérisé en ce que** le dispositif d'interprétation (76) est configuré pour régler ou réguler au moins un paramètre de fonctionnement de la moissonneuse (10) à l'aide de la propriété déterminée des plantes (82) à ramasser, notamment la vitesse d'avancement et/ou la taille d'un interstice de contre-batteur et/ou la vitesse de rotation d'une soufflerie de nettoyage (96) et/ou la taille d'une ouverture de tamis.

8. Arrangement selon l'une des revendications précédentes, **caractérisé en ce que** le dispositif d'interprétation (76) peut être mis en oeuvre pour, lors de l'utilisation des données de calibrage (106), tenir compte de la position de la moissonneuse (10) dans le champ et/ou de propriétés connues du champ.

9. Arrangement selon l'une des revendications précédentes, **caractérisé en ce que** le dispositif d'interprétation (76) peut être mis en oeuvre pour utiliser un modèle de facteur de Bayes, notamment un modèle de Markov caché, en vue de déterminer automatiquement les relations entre les paramètres statistiques (108, 110, 116, 118, 120, 122) dérivés des signaux de l'arrangement de détection (62) et les signaux du dispositif de mesure (88, 92, 94, 100, 102).

10. Arrangement selon l'une des revendications précédentes, **caractérisé en ce que** le dispositif d'interprétation (76) peut être mis en oeuvre pour, à l'aide des signaux du dispositif de mesure (88, 92, 94, 100, 102), déterminer au moyen d'un modèle statique (132) des propriétés de la matière moissonnée et/ou du champ, comme par exemple le taux d'humidité de la matière moissonnée (134), le volume de la matière moissonnée (136), le rendement en grains (138) et/ou l'accessibilité aux véhicules (140) du champ, et déterminer les données de calibrage (106) à l'aide des propriétés calculées de la matière moissonnée et/ou du champ.

11. Moissonneuse (10) équipée d'un arrangement selon l'une des revendications précédentes.

12. Procédé d'analyse anticipée de plantes (82) à ramasser avec une moissonneuse (10), comprenant les étapes suivantes :
génération de signaux concernant au moins une propriété des plantes (82) au moyen d'un arrangement de détection (62) qui coopère sans contact avec les plantes (82) sur un champ,
acquisition d'une propriété des plantes réellement ramassées par la moissonneuse (10) au moyen d'un dispositif de mesure (88, 92, 94, 100, 102),
génération de données de calibrage (106) à l'aide de signaux du dispositif de mesure (88, 92, 94, 100, 102) et de paramètres statistiques (108, 110, 116, 118, 120, 122) dérivés des signaux de l'arrangement de détection (62) au moyen d'un dispositif d'interprétation (76), et calcul de la propriété des plantes (82) à ramasser à l'aide des paramètres statistiques (108, 110, 116, 118, 120, 122) qui sont dérivés des signaux de l'arrangement de détection (62) associés aux plantes (82) à ramasser et des données de calibrage (106) au moyen du dispositif d'interprétation (76),
**caractérisé en ce que** le dispositif d'interprétation (76) détermine automatiquement des relations entre les paramètres statistiques (108, 110, 116, 118, 120, 122) dérivés des signaux de l'arrangement de détection (62) et les signaux du dispositif de mesure (88, 92, 94, 100, 102) et tient compte de ces relations lors du calcul de la propriété des plantes (82) à ramasser.
